# EUROPÄISCHE PATENTSCHRIFT

(11) **EP 0 834 439 B1**
(45) Veröffentlichungstag und Bekanntmachung des Hinweises auf die Patenterteilung: **03.07.2002**
(21) Anmeldenummer: 97115500.7
(22) Anmeldetag: 08.09.1997
(51) Int. Cl.: B62D 1/19, F16B 17/00

(54) **Verbindung und Verfahren zum formschlüssigen Verbinden zweier Rohre**
Connection and procedure for positively connecting two tubes
Engagement et procédé pour raccorder par engagement positif deux tuyaux

(30) Priorität: 02.10.1996 DE 19640776
(43) Veröffentlichungstag der Anmeldung: 08.04.1998
(73) Patentinhaber: ETABLISSEMENT SUPERVIS, FL-9490 Vaduz (LI)
(72) Erfinder: Näff, Dominik, Dipl.-Ing., 9495 Triesen (LI); Lörenz, René, 6850 Dornbirn (AT)
(74) Vertreter: Hofmann, Ralf U., Dr.

(56) Entgegenhaltungen:
- EP-A- 0 725 000

## Beschreibung

Die Erfindung bezieht sich auf ein Verfahren zum formschlüssigen Verbinden zweier Rohre, wobei das eine Rohr in das andere Rohr ragt, und auf eine danach hergestellte formschlüssige Verbindung zweier Rohre.

Beispielsweise werden Lenkspindeln bei Lenkvorrichtungen für Kraftfahrzeuge aus zwei ineinanderragenden Rohren gebildet, die so gelagert sind, daß sie gegeneinander verschiebbar sind, wenn das Kraftfahrzeug in einen Unfall (Frontalkollision) verwickelt wird. Dadurch soll gewährleistet werden, daß im Falle einer Frontalkollision die Lenkvorrichtung den Fahrer nicht gefährdet. Lenkspindeln sollen in der Herstellung billig sein, es sollen für ihre Herstellung möglichst einfache und preisgünstige Halbzeuge verwendet werden können, spanabhebende Bearbeitungen sollen möglichst vermieden werden, um die Herstellungskosten nicht in die Höhe zu treiben. Trotz ihres mindestens zweiteiligen Aufbaues dürfen sie in Drehrichtung der Spindel kein Spiel aufweisen, und darüberhinaus muß sich die Lenkspindel, wenn eine vorherbestimmbare Kraft in axialer Richtung infolge einer Kollision auf sie einwirkt, verkürzen, indem die Teile sich axial gegeneinander verschieben.

Für Lenkspindeln für Lenkvorrichtungen bei Kraftfahrzeugen sind zwei verschiedene Bauarten bekannt geworden: Bei der einen Bauart wird im Kollisionsfall die Stoßenergie in Verformungsarbeit umgewandelt, bei der anderen bekannt gewordenen Bauart wird die Stoßenergie im Kollisionsfall in Reibungsarbeit und damit in Wärme umgesetzt (DE-AS 29 57 713; DE-AS 29 47 395; DE-AS 29 11 021; DE-AS 24 31 883; DE 16 30 376 B2; DE-OS 25 31 263; DE-OS 22 47 850; DE-OS 22 32 836; DE-OS 21 08 913; DE-OS 20 20 390; DE-PS 32 23 004; DD 141 115; GB 15 24 871).

In diesem Zusammenhang sind hier vor allem jene Lenkspindeln zu erwähnen, die der ersten Kategorie angehören und die aus der DE-OS 40 17 995, der GB-PS 11 56 423 und der US-PS 3 504 567 bekannt sind. Der Aufbau dieser bekannten Lenkspindeln ist sehr aufwendig, ebenso das Verfahren zu ihrer Herstellung.

Das Dokument EP 0 725 000 A1 zeigt eine formischlüssige Verbindung gemäß des Oberbegriffs von den Ansprüchen 1 und 6.

Ausgehend von diesem Stand der Technik zielt die Erfindung nun darauf ab, ein Verfahren vorzuschlagen, das ohne besonderen Aufwand und mit geringem Werkzeugeinsatz durchführbar ist. Dieses Verfahren ist nun durch jene Merkmale gekennzeichnet, die Gegenstand und Inhalt des Patentanspruches 1 sind.

Die durch dieses Verfahren gewonnene formschlüssige Verbindung zweier Rohre, insbesondere zweier eine Lenkspindel für Kraftfahrzeuge bildender Rohre, ist nun gekennzeichnet dadurch, daß das eine Rohr an zwei diametral liegenden Stellen des Mantels längliche Aussparungen aufweist, wobei endseitig in diesen länglichen Aussparungen zumindest je ein die Aussparung querender Steg vorgesehen ist und das andere Rohr zwei diametral zueinander liegende, durch die Aussparungen des anderen Rohres ragende und um den die Aussparung in zwei Abschnitte teilenden Steg gerollte Laschen aufweist.

Um die Erfindung zu veranschaulichen, wird sie anhand der Zeichnung im folgenden ausführlich beschrieben. Es zeigen:
- Fig. 1: die Ansicht des äußeren Rohres und
- Fig. 2: einen Längsschnitt nach der Linie II-II in Fig. 1;
- Fig. 3: die Ansicht des Innenrohres und
- Fig. 4: dessen Stirnseite - Blickrichtung Pfeil A in Fig. 3;
- die Fig. 5 bis 8: vier Verfahrensschritte beim Zusammenfügen der beiden Rohre, und zwar im Längsschnitt;
- Fig. 9: die Draufsicht auf die Verbindungsstelle nach Fig. 8;
- Fig. 10: die Ansicht des Formwerkzeuges und
- Fig. 11: dessen Draufsicht;
- Fig. 12und Fig. 13: je ein Detail.

Das eine äußere Rohr 1, das beispielsweise für die Herstellung einer Lenksäule für Kraftfahrzeuge vorgesehen ist, besitzt an zwei diametral liegenden Stellen je eine längliche Aussparung 2, wobei im jeweiligen Endbereich diese Langlochaussparung 2 durch einen quer liegenden Steg 3 in zwei Abschnitte 4 und 5 unterteilt ist. Diese beiden Abschnitte sind unterschiedlich groß. Im jeweils kleineren Abschnitt 5 ist eine gegen den Steg 3 gerichtete Zunge 6 vorgesehen.

Das zweite und hier innere Rohr 7, das für die Herstellung der Lenksäule vorgesehen ist, weist ebenfalls an diametral liegenden Stellen jeweils von der Stirnseite 8 ausgehende, paarweise angeordnete Schwächungszonen 9 auf, die spanabhebend oder durch einen Prägevorgang hergestellt sein können. Diese linienförmigen Schwächungszonen 9 erstrecken sich in Längsrichtung des Rohres 7.

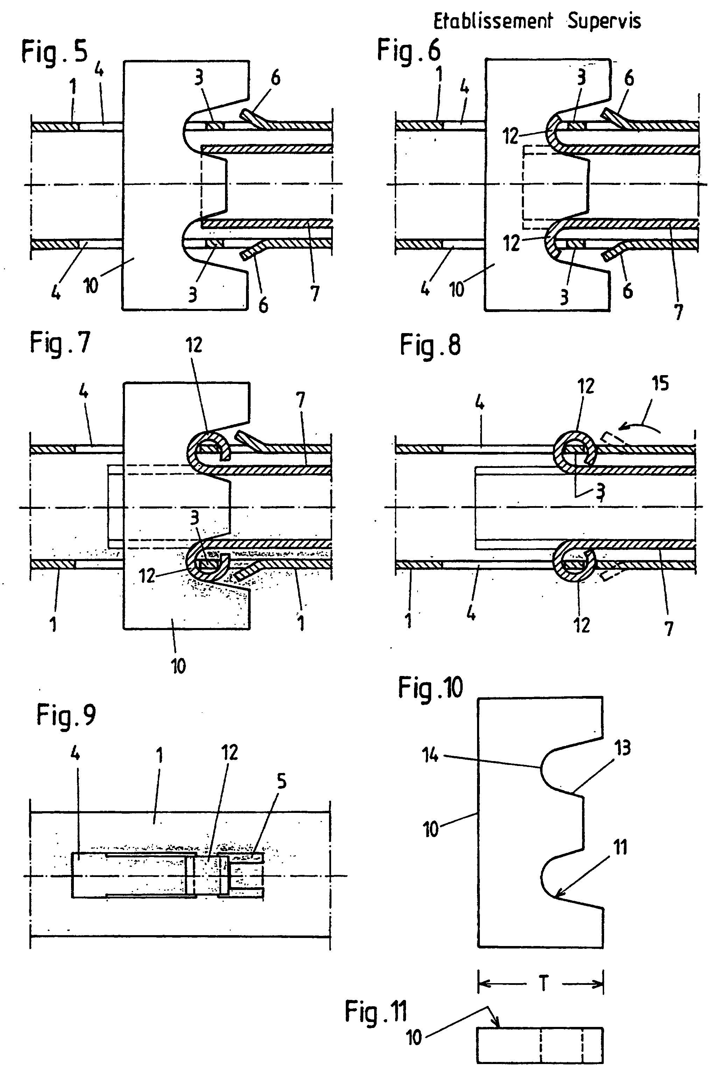

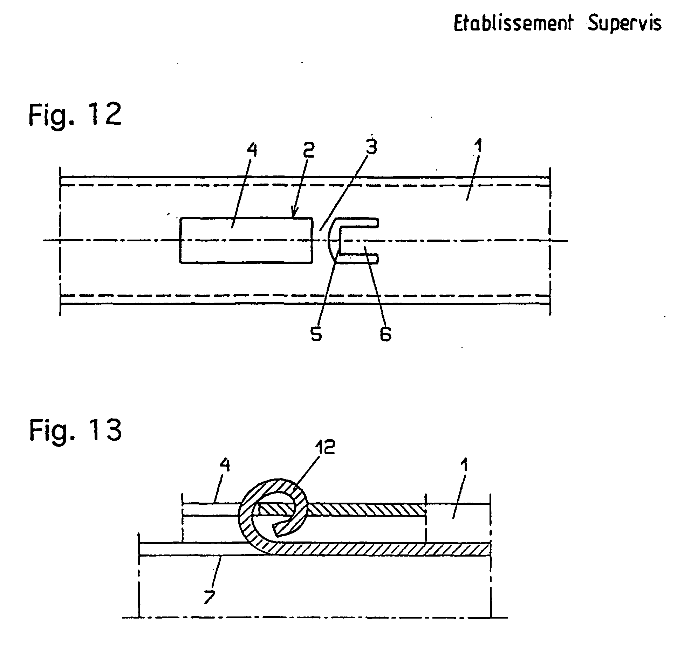

Diese beiden Rohre 1 und 7 gelangen in dieser vorbereiteten Art zur Montage, wobei die Zunge 6 im kleinen Abschnitt 5 der Aussparung 2 des Rohres 1 etwas hochgebogen ist. Für diese Montage ist ein Formwerkzeug 10 vorgesehen, das in den Figuren 10 und 11 in Ansicht und in Draufsicht dargestellt ist. Dieses Formwerkzeug 10 wird nun durch den größeren Abschnitt 4 der Aussparung 2 in das Rohr 1 eingesetzt und entsprechend arretiert. Gegen dieses Formwerkzeug wird nun das Rohr 7 in das Rohr 1 eingeschoben, und zwar so positioniert, daß die Aussparungen 2 und die durch die Schwächungszonen 9 begrenzten Laschen 12 deckungsgleich liegen. Die Stirnseiten der Laschen 12 laufen nun auf das Formwerkzeug 10 auf bzw. auf dessen formende Fläche 11, die einen keilartigen Ansatz 13 und eine daran anschließende Biegezone besitzt. Die auf den keilartigen Ansatz 13 auflaufende Stirnseite der Lasche 12 wird nun entlang der Schwächungszonen 9 aufgerissen und anschließend durch die Biegezone 14 aufgebogen und umgebördelt (Fig. 5 bis 6), wobei sich die so aufgebördelte Lasche um den Steg 3 (Fig. 7) legt, der auf diese Weise formschlüssig umfaßt wird. Anschließend wird durch einen in Richtung des Pfeiles 15 (Fig. 8) auf die vorerst hochgebogene Zunge 6 ausgeübten Druck diese wieder zurückgebogen, wobei sie sich mit ihrer Stirnseite an die umgebogene Lasche 12 anlegt und andrückt. Das Formwerkzeug 10 wird zuerst in axialer Richtung des Rohres zurückgenommen und dann quer zur Längsachse des Rohres ausgeführt. Die Längserstreckung des Abschnittes 4 der Ausnehmung 2 ist etwas größer als die Tiefe T des Formwerkzeuges 10. Die Längserstreckung der Schwächungszonen 9 ist größer als die Länge des umgebördelten Teiles der Lasche 12, so daß im Kollisionsfall noch ein Teil der Schwächungszonen 9 durch die sich gegeneinander bewegenden Rohre aufgerissen werden können, wobei energieverzehrende Deformationsarbeit geleistet wird, wie dies bei der eingangs erwähnten Art von Lenksäulen angestrebt wird.

Beim gezeigten Ausführungsbeispiel sind die länglichen Aussparungen 2 im Außenrohr 1. Es ist denkbar, die Anordnung so zu treffen, daß das Rohr mit den umzubördelnden Laschen das Außenrohr bildet. Wenn vorstehend davon die Rede ist, daß ein Teil gegen den anderen bewegt wird, so liegt es im Rahmen der Erfindung, diese Bewegungsabläufe sozusagen umzukehren, also den zuerst bewegten Teil festzuhalten und den zuerst festgehaltenen Teil zu bewegen.

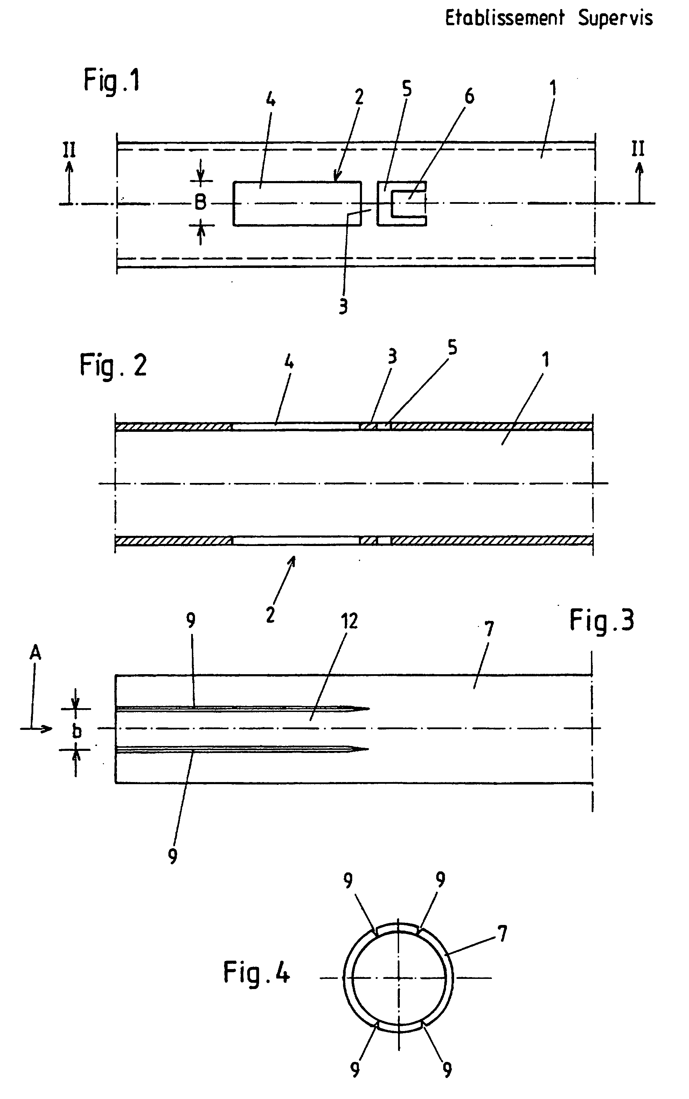

Bei dem in den Fig. 1 und 2 veranschaulichten Ausführungsbeispiel des einen Rohres 1 sind die Begrenzungskanten des Steges 3, die sich quer zum Rohr erstrecken, in Draufsicht (Fig. 1) gerade und parallel zueinander. Es liegt im Rahmen der Erfindung, die der Zunge 6 benachbart liegende Begrenzungskante des Steges 3 so zu gestalten, daß sie in Draufsicht einen bogenförmigen oder abgewinkelten Verlauf zeigt (Fig. 12). Dadurch wird erreicht, daß sich die aufrollende Lasche 12 eng und spielfrei an den Steg 3 anlegen kann. Nach einer weiteren Maßnahme ist vorgesehen, das freie Ende der um den Steg 3 gerollten Lasche 12 in einem zusätzlichen Arbeitsgang umzubiegen, wie dies Fig. 13 schematisch veranschaulicht. Hiezu wird ein gabelartiges Werkzeug eingesetzt, das von oben her in den Abschnitt 5 des Rohres eingeführt wird, wobei es die Zunge 6 zwischen seinen Gabelarmen aufnimmt, und dann wird dieses Werkzeug in Richtung der aufgerollten Lasche 12 versetzt und dadurch die in Fig. 13 gezeigte zusätzliche Umbiegung erzielt. Dieser Arbeitsgang kann vor oder nach dem Umbiegen der Zunge 6 durchgeführt werden.

Die der Vorbereitung der Rohre dienenden Arbeitsabläufe sind einfach, ebenso die dafür notwendigen Werkzeuge. Einfach ist auch das Verfahren zur formschlüssigen Verbindung, wie vorstehend im einzelnen dargelegt. Trotzdem wird eine stabile, formschlüssige Verbindung der beiden Rohre erzielt, die darüberhinaus in Drehrichtung der Rohre spielfrei ist.

### Legende zu den Hinweisziffern:

- 1: Rohr
- 2: längliche Aussparung
- 3: Steg
- 4: Abschnitt
- 5: Abschnitt
- 6: Zunge
- 7: Rohr
- 8: Stirnseite
- 9: Schwächungszone
- 10: Formwerkzeug
- 11: gestaltete Fläche
- 12: Lasche
- 13: keilartiger Ansatz
- 14: Biegezone

## Patentansprüche

1. Verfahren zum formschlüssigen Verbinden zweier Rohre (1, 7), wobei das eine Rohr (7) in das andere Rohr (1) ragt, wobei im Mantel des einen Rohres (1) an diametral liegenden Stellen längliche Aussparungen (2) vorgesehen werden, und im Mantel des anderen Rohres (7), ausgehend von dessen Stirnseiten (8), in diametraler Anordnung paarweise angeordnete, längsverlaufende Laschen (12) eingearbeitet werden **dadurch gekennzeichnet, daß** endseitig in diesen länglichen Aussparungen (2) zumindest je ein die Aussparung (2) querender Steg (3) vorgesehen wird, und anschließend das eine Rohr (7) in das andere Rohr (1) eingeschoben wird, wobei die Stirnseiten (8) der Laschen (12) gegen ein in die Aussparungen (2) des anderen Rohres vorübergehend eingesetztes Formwerkzeug (10) gepreßt werden und dadurch die Laschen (12) um den Steg (3) gerollt werden.

2. Verfahren nach Anspruch 1, **dadurch gekennzeichnet, daß** die länglichen Aussparungen (2) mit dem sie querenden Steg (3) im äußeren Rohr (1) vorgesehen werden.

3. Verfahren nach Anspruch 1, **dadurch gekennzeichnet, daß** die beiden durch den Steg (3) getrennten Abschnitte (4, 5) der länglichen Ausnehmungen (2) verschieden groß gewählt werden.

4. Verfahren nach Anspruch 3, **dadurch gekennzeichnet, daß** im kleineren Abschnitt (5) der Ausnehmung (2) eine gegen den Steg (3) gerichtete Zunge (6) vorgesehen wird, die während des Zusammenfügens der Rohre (1, 7) hochgebogen ist und nach dem Zusammenfügen gegen die um den Steg (3) gerollte Lasche (12) gepreßt wird.

5. Verfahren nach Anspruch 1, **dadurch gekennzeichnet, daß** die Laschen (12) von Schwächungszonen (9) begrenzt werden und diese Schwächungszonen (9) aufgerissen werden, wenn die Stirnseiten (8) der Laschen (12) gegen das vorübergehend eingesetzte Formwerkzeug (10) gepreßt werden.

6. Formschlüssige Verbindung zweier Rohre (1, 7), insbesondere zweier eine Lenkspindel für Kraftfahrzeuge bildende Rohre, hergestellt nach dem Verfahren gemäß einem der Ansprüche 1 bis 5, wobei das eine Rohr (1) an zwei diametral liegenden Stellen des Mantels längliche Aussparungen (2) aufweist, **dadurch gekennzeichnet, daß** endseitig in diesen länglichen Aussparungen (2) zumindest je ein die Aussparung querender Steg (3) vorgesehen ist und das andere Rohr (7) zwei diametral zueinander liegende, durch die Aussparungen (2) des anderen Rohres (1) ragende und um den die Aussparung (2) in zwei Abschnitte (4, 5) teilenden Steg (3) gerollte Laschen (12) aufweist.

7. Formschlüssige Verbindung nach Anspruch 6, **dadurch gekennzeichnet, daß** die vom Steg (3) gebildeten Abschnitte (4, 5) der länglichen Aussparung (2) unterschiedlich groß sind.

8. Formschlüssige Verbindung nach Anspruch 7, **dadurch gekennzeichnet, daß** im kleineren Abschnitt (5) der länglichen Aussparung (2) eine gegen den Steg (3) gerichtete und an der gerollten Lasche (12) anliegende Zunge (6) vorgesehen ist.

9. Formschlüssige Verbindung nach einem der Ansprüche 6 bis 8, **dadurch gekennzeichnet, daß** die länglichen Aussparungen (2) mit den sie querenden Stegen (3) im äußeren Rohr (1) vorgesehen sind.

10. Formschlüssige Verbindung nach Anspruch 6, **dadurch gekennzeichnet, daß** die Breite der länglichen Aussparungen (2) größer ist als die Breite der Laschen (12) des anderen Rohres (7).

11. Formschlüssige Verbindung nach einem der Ansprüche 6 bis 10, **dadurch gekennzeichnet, daß** die vorerst gestreckten und bei der Montage sich aufrollenden Laschen (12) des einen Rohres (7) durch von dessen Stirnseite ausgehende, paarweise vorgesehene Schwächungszonen (9) gebildet sind.

12. Formschlüssige Verbindung nach Anspruch 11, **dadurch gekennzeichnet, daß** die Länge der Schwächungszone (9) größer ist als der bei der Montage der Rohre (1, 7) umgebör delte Teil der Lasche (12).

13. Formschlüssige Verbindung nach Anspruch 6 oder 8, **dadurch gekennzeichnet, daß** die eine Begrenzungskante des Steges (3), die der Zunge (6) benachbart liegt, in Draufsicht bogenförmig oder abgewinkelt ausgebildet ist.

14. Formschlüssige Verbindung nach Anspruch 6, **dadurch gekennzeichnet, daß** die um den Steg (3) gerollte Lasche (12) bzw. deren freies Ende eine zusätzliche Umbiegung besitzt.

## Claims

1. A method of positively connecting two tubes (1, 7), wherein one tube (7) projects into the other tube (1), wherein elongate openings (2) are provided in the casing of the one tube (1) at diametrical locations and longitudinally extending tongues (12). arranged pairwise diametrically are formed in the casing of the other tube (7) starting from the ends (8) thereof, **characterised in that** at least one crosspiece (3) traversing the elongate opening (2) is provided at the end of these openings (2) and then the one tube (7) is pushed into the other tube (1), during which the ends (8) of the tongues (12) are pushed against a shaping tool (10) temporarily inserted into the openings (2) in the other tube and the tongues (12) are thereby rolled around the crosspiece (3).

2. A method according to claim 1, **characterised in that** the elongate openings (2) with the crosspiece (3) traversing them are provided in the outer tube (1).

3. A method according to claim 1, **characterised in that** the two portions (4, 5) of the elongate openings (2) separated by the crosspiece (3) are of different sizes.

4. A method according to claim 3, **characterised in that**, in the smaller portion (5) of the opening (2), a tab (6) extending towards the crosspiece (3) is provided which is bent upwards during connection of the tubes (1, 7) and, after connection, is pressed against the tongue (12) rolled around the crosspiece (3).

5. A method according to claim 1, **characterised in that** the tongues (12) are bordered by weakened zones (9) and these weakened zones (9) are torn when the ends (8) of the tongues (12) are pressed against the temporarily inserted shaping tool (10).

6. A positive connection between two tubes (1, 7), in particular two tubes forming a steering spindle for motor vehicles, produced by the method according to any one of claims 1 to 5, wherein the one tube (1) has elongate openings (2) at diametrical locations in the casing, **characterised in that** at least one crosspiece (3) traversing the elongate opening (2) is provided at the end of these openings (2) and the other tube (7) has two diametrically arranged tongues (12) projecting through the openings (2) in the other tube (1) and rolled around the crosspiece (3) dividing the opening (2) into two portions (4, 5).

7. A positive connection according to claim 6, **characterised in that** the portions (4, 5) of the elongate opening (2) formed by the crosspiece (3) are of different sizes.

8. A positive connection according to claim 7, **characterised in that** a tab (6) extending towards the crosspiece (3) and resting against the rolled tongue (12) is provided in the smaller portion (5) of the elongate opening (2).

9. A positive connection according to any one of claims 6 to 8, **characterised in that** the elongate openings (2) with the crosspieces (3) traversing them are provided in the outer tube (1).

10. A positive connection according to claim 6, **characterised in that** the width of the elongate openings (2) is greater than the width of the tongues (12) of the other tube (7).

11. A positive connection according to any one of claims 6 to 10, **characterised in that** the tongues (12) of the one tube (7), which are initially extended and then rolled up during assembly, are formed by weakened zones (9) provided in pairs starting from the end of the tube (7).

12. A positive connection according to claim 11, **characterised in that** the length of the weakened zone (9) is greater than the part of the tongue (12) flanged during assembly of the tubes (1, 7).

13. A positive connection according to claim 6 or 8, **characterised in that** the one boundary edge of the crosspiece (3) adjacent to the tab (6) is curved or angled in plan view.

14. A positive connection according to claim 6, **characterised in that** the tongue (12) rolled around the crosspiece (3), or rather the free end of the tongue (12), has an additional bend.

## Revendications

1. Procédé de raccordement mécanique de deux tubes (1,7), dans lequel un tube (7) dépasse dans l'autre tube (1), dans lequel des cavités allongées (2) sont ménagées en des points diamétralement disposés de l'enveloppe du premier tube (1) et dans lequel des pattes longitudinales (12) agencées diamétralement par paire sont ménagées dans l'enveloppe de l'autre tube (7) à partir de ses côtés frontaux (8), **caractérisé en ce qu'**il est prévu côté extrémité dans ces cavités allongées (2) au moins respectivement une barrette (3) traversant la cavité (2) et, ensuite, le premier tube (7) est enfilé dans l'autre tube (1), les côtés frontaux (8) des pattes (12) étant pressés contre un outil de formage (10) inséré momentanément dans les cavités (2) de l'autre tube et les pattes étant ainsi enroulées autour de la barrette (3).

2. Procédé selon la revendication 1, **caractérisé en ce que** les cavités allongées (2) sont prévues, avec la barrette (3) qui les traverse, dans le tube externe (1).

3. Procédé selon la revendication 1, **caractérisé en ce que** les deux sections (4,5), séparées par la barrette (3), des cavités allongées (2) sont choisies de différentes grandeurs.

4. Procédé selon la revendication 3, **caractérisé en ce qu'**il est prévu, dans la section la plus petite (5) de la cavité (2), une languette (6) tournée vers la barrette (3), qui est pliée vers le haut au cours de l'assemblage des tubes (1,7) et est pressée, après l'assemblage, contre la patte (12) enroulée autour de la barrette (3).

5. Procédé selon la revendication 1, **caractérisé en ce que** les pattes (12) sont délimitées par des zones d'affaiblissement (9) et ces zones d'affaiblissement (9) sont déchirées lorsque les côtés frontaux (8) des pattes (12) sont pressés contre l'outil de formage (10) momentanément inséré.

6. Raccordement mécanique de deux tubes (1,7), en particulier de deux tubes formant un arbre de direction de véhicules automobiles, fabriqué selon le procédé de l'une quelconque des revendications 1 à 5, dans lequel le premier tube (1) présente, en deux points diamétralement disposés de l'enveloppe, des cavités allongées (2), **caractérisé en ce que**, côté extrémité, il est prévu dans ces cavités allongées (2) au moins respectivement une barrette (3) traversant la cavité (2) et l'autre tube (7) présente deux pattes (12) diamétralement disposées, faisant saillie à travers les cavités (2) de l'autre tube (1) et enroulées autour de la barrette (3) partageant la cavité (2) en deux sections (4,5).

7. Raccordement mécanique selon la revendication 6, **caractérisé en ce que** les sections (4,5) de la cavité allongée (2) formées par la barrette (3) sont de grandeurs différentes.

8. Raccordement mécanique selon la revendication 7, **caractérisé en ce que**, dans la section la plus petite (5) de la cavité allongée (2), il est prévu une languette (6) tournée vers la barrette (3) et s'appliquant sur la patte enroulée (12).

9. Raccordement mécanique selon l'une quelconque des revendications 6 à 8, **caractérisé en ce que** les cavités allongées (2) sont prévues, avec les barrettes (3) qui les traversent, dans le tube externe (1).

10. Raccordement mécanique selon la revendication 6, **caractérisé en ce que** la largeur des cavités allongées (2) est plus grande que la largeur des pattes (12) de l'autre tube (7).

11. Raccordement mécanique selon l'une quelconque des revendications 6 à 10, **caractérisé en ce que** les pattes (12) du premier tube (7) étirées en premier lieu et enroulées au cours du montage sont formées par des zones d'affaiblissement (9) commençant depuis son côté frontal et agencées par paire.

12. Raccordement mécanique selon la revendication 11, **caractérisé en ce que** la longueur de la zone d'affaiblissement (9) est plus grande que la partie de la patte (12) rabattue lors du montage des tubes (1,7).

13. Raccordement mécanique selon la revendication 6 ou 8, **caractérisé en ce que** le premier bord de délimitation de la barrette (3), qui est voisin de la languette (6), est conformé en arc ou en coude en élévation.

14. Raccordement mécanique selon la revendication 6, **caractérisé en ce que** la patte (12) enroulée autour de la barrette (3) ou son extrémité libre possède un pliage supplémentaire.
